Europäisches Patentamt

European Patent Office

Office européen des brevets

(11) Publication number: 0 398 549 A1

# EUROPEAN PATENT APPLICATION

(21) Application number: 90304771.0

(51) Int. Cl.5: B60Q 1/26

(22) Date of filing: 02.05.90

(30) Priority: 18.05.89 GB 8911418

(43) Date of publication of application:
22.11.90 Bulletin 90/47

(84) Designated Contracting States:
DE FR GB IT

(71) Applicant: Britax (P.M.G.) Limited
Bessingby Industrial Estate, Bridlington
North Humberside. YO16 4SJ(GB)

(72) Inventor: Weldon, Raymond Leslie
13 Kingston Road
Bridlington, North Humberside(GB)

(74) Representative: Hollinghurst, Antony
Britax Limited Patent Department
Chichester West Sussex PO19 2AQ(GB)

(54) Signal lamp.

(57) A signal lamp has a reflector (66) mounted on a rotary platform (22) which is journalled on a stationary vertical shaft (20), an electric motor (40) coupled to the platform (22) for causing rotation thereof and a bulb (70) mounted on the top of the shaft (20) level with the horizontal beam axis of the reflector (66). The reflector platform (22) has a pulley (28) formed on its periphery coupled by a flexible belt 30 to a small diameter portion (36) of an idler pulley (32). The electric motor (40) is mounted with its drive shaft (42) horizontal and coupled by a second flexible belt (46) to a large diameter portion (38) of the idler pulley (32).

Fig.1.

This invention relates to a signal lamp of the type having a reflector mounted on a rotary platform which is journalled on a stationary vertical shaft, an electric motor mounted with its drive shaft horizontal and coupled to the platform for causing rotation thereof and a bulb mounted on the top of the shaft on a level with the horizontal beam axis of the reflector.

A signal lamp of this type is disclosed in GB Patent Specification No. 1561171. The electric motor drives the reflector via a worm gear. This enables a small high-speed motor to be used with its drive shaft horizontal, thus saving both weight and space. However, there is a risk of damaging such a worm gear if the reflector is turned by hand, for example, during bulb replacement and consequently a separate friction coupling is provided. The present invention aims to provide a signal lamp in which the foregoing advantages are obtained without the cost and weight penalty caused by such a separate friction coupling.

According to the invention, in a signal lamp of the foregoing type, the reflector platform has a pulley formed on its periphery coupled by a first flexible belt to a small diameter portion of an idler pulley, and the electric motor is coupled by a flexible belt to a large diameter portion of the idler pulley.

Preferably the idler pulley is mounted with its axis vertical.

An embodiment of the invention will now be described, by way of example, with reference to the accompanying drawing in which:

Figure 1 is a vertical cross-sectional view of a signal lamp in accordance with the invention; and

Figure 2 is a plan view of the mechanism of the signal lamp shown in Figure 1 with the top cover, reflector and bulb removed.

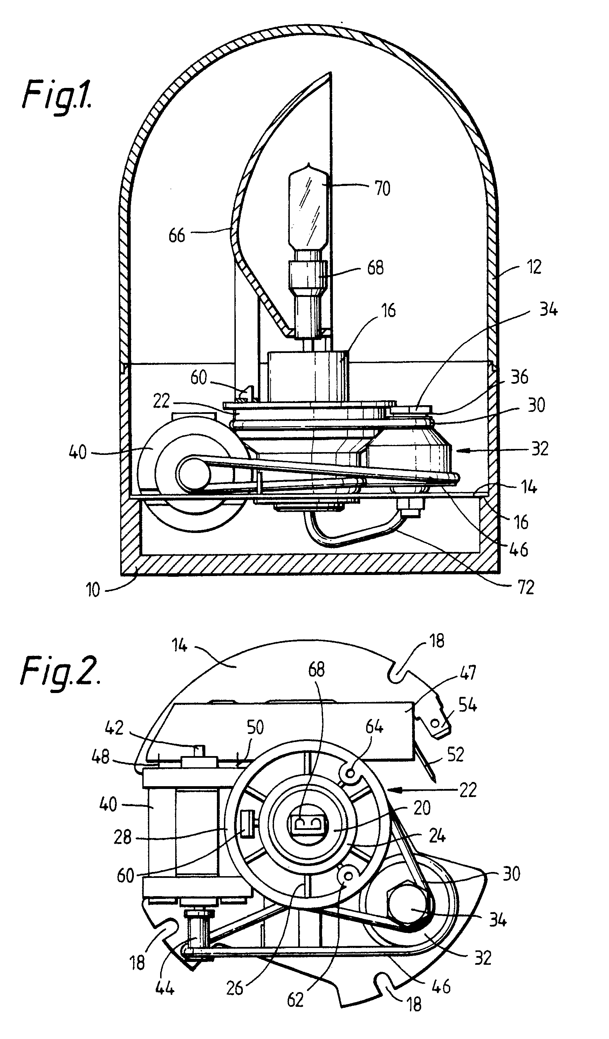

Referring to Figure 1, a signal lamp in accordance with the invention has a hollow cylindrical base housing 10 and a transluscent dome-like cover 12, both formed from plastics material. The base housing 10 is opaque while the cover 12 is coloured in accordance with the required colour of the light from the lamp.

A metal chassis plate 14 is mounted horizontally on a shoulder 16 within the base housing 10 and is secured by screws (not shown) projecting through slots 18 in its periphery. A stationary shaft 20 projects upwardly from the centre of the chassis plate 14 and has a reflector platform 22 journalled thereon. As can be seen from Figure 2, the reflector platform 22 has an inner hub portion 24 connected by spokes 26 to an outer flange portion 28, the edge of which serves as a pulley for a flexible belt 30.

An idler pulley 32 which is journalled on a shaft 34 secured to the chassis plate 14, has a small diameter upper portion 36 and a larger diameter lower portion 38. The belt 30 engages round the small diameter upper portion 36.

An electric motor 40 is mounted on the chassis plate 14 on the opposite side to the pulley 32. The shaft 42 of the motor 40 is orientated horizontally and has a drive pulley 44 on one end. A second flexible belt 46 extends round the drive pulley 44 and the large diameter portion 38 of the idler pulley 32, thus serving both as a reduction drive and to convert the rotary movement about the horizontal axis of the output shaft 42 of the motor 40 to rotary movement about the vertical axis of the shaft 34.

A printed circuit board 46 is mounted on the chassis plate 14. The conductors on the printed circuit board 46 are not illustrated. However, as can be seen, the electric motor 40 is connected thereto by leads 48 and 50 and the electrical supply to the lamp is via a tag 52 thereon and an earth return pad 54 formed integrally with the chassis plate 14.

The reflector platform 22 carries a lug 60 and screw-receiving formations 62 and 64 whereby a parabolic reflector 66 (Figure 1) may be mounted thereon. A lamp holder 68 is mounted on the top of the shaft 16 so as to support a bulb 70 at the focus of the parabolic reflector 66. The lampholder 68 is electrically connected to the printed circuit board 46 by a lead 72 (Figure 1).

The invention accordingly provides a compact drive assembly. The two-stage speed reduction provided by the belts 30 and 46 enable a relatively high speed (and therefore small) motor 40 to be used. Since the motor 40 is mounted with its shaft 42 horizontal, the length of this shaft does not affect the height of the base portion 10.

The shape of the reflector 66 forms no part of the invention. Non-parabolic reflectors may be used if desired.

## Claims

1. A signal lamp having a reflector (66) mounted on a rotary platform (22) which is journalled on a stationary vertical shaft (20), an electric motor (40) mounted with its drive shaft (42) perpendicular to the stationary shaft (20) and coupled to the platform (22) for causing rotation thereof, and a bulb (70) mounted on the top of the stationary shaft (20) level with the horizontal beam axis of the reflector (66), characterised in that the reflector platform (22) has a pulley (28) formed on its periphery coupled by a first (30) flexible belt to a small diameter portion (36) of an idler pulley (32), and the electric motor being coupled by a second flexible belt (46) to a large diameter portion (38) of the idler pulley (32).

2. A signal lamp according to claim 1, wherein the idler pulley is mounted with its axis parallel to
the shaft.

Fig.1.

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-1055959 (PIFCO LIMITED)<br>* the whole document *<br>----- | 1, 2 | B60Q1/26 |
| | | | TECHNICAL FIELDS SEARCHED (Int. Cl.5 ) |
| | | | B60Q |

The present search report has been drawn up for all claims

| Place of search | Date of completion of the search | Examiner |
|---|---|---|
| THE HAGUE | 24 SEPTEMBER 1990 | ONILLON C.G.A. |